# FASCICULE DE BREVET EUROPEEN

(11) **EP 1 201 957 B1**
(45) Date de publication et mention de la délivrance du brevet: **18.07.2007**
(21) Numéro de dépôt: 01402769.2
(22) Date de dépôt: 25.10.2001
(51) Int. Cl.: F16D 65/12

(54) **Ensemble de roue avec un frein à disque pour véhicule automobile**
Radbaugruppe mit einer Scheibenbremse für Fahrzeuge
Wheel assembly with a disc brake for vehicles

(30) Priorité: 26.10.2000 FR 0013743
(43) Date de publication de la demande: 02.05.2002
(73) Titulaire: Renault s.a.s., 92100 Boulogne Billancourt (FR)
(72) Inventeur: Gey, Yves, 72230 Guecelard (FR)

(56) Documents cités:
- DE-U- 29 721 607
- US-A- 5 884 980
- US-A- 5 890 567

## Description

La présente invention est relative à un ensemble roue/frein de roue pour véhicule automobile, le frein comportant une pièce tournante montée sur un moyeu de support de la roue dans des positions axiale et angulaire prédéterminées, la roue étant fixée sur le moyeu par des vis axiales serrant la pièce tournante entre la roue et le moyeu, des moyens étant prévus pour maintenir la pièce tournante sur le moyeu dans lesdites positions prédéterminées quand la roue est démontée.

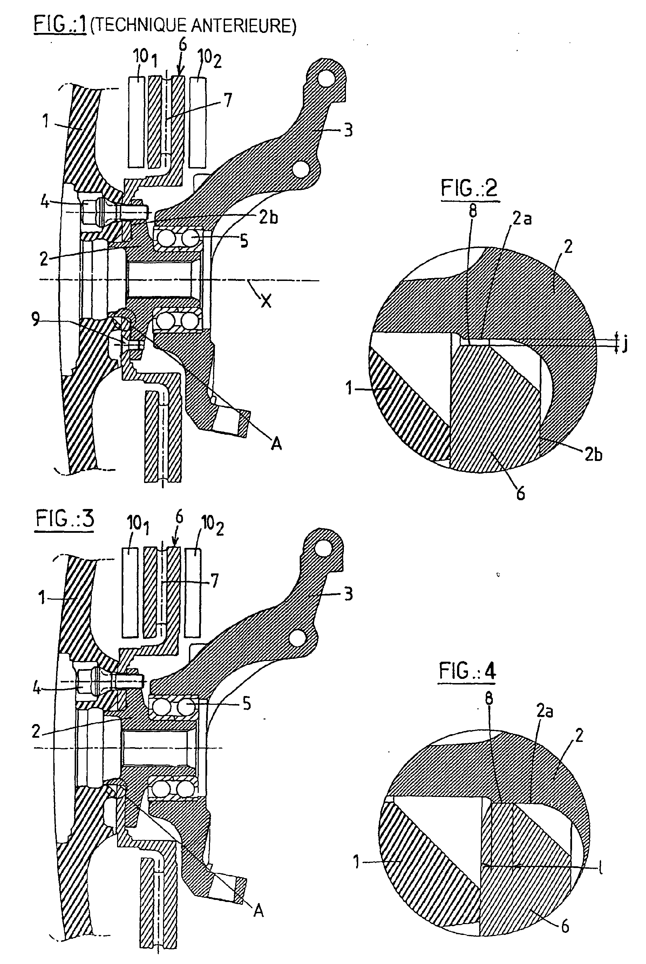

On a représenté à la figure 1 du dessin annexé un ensemble connu de ce type, qui comprend une roue 1 (dont seule la partie centrale est représentée) fixée sur un moyeu 2 de support de cette roue sur un porte-fusée 3. La roue est classiquement fixée sur le moyeu par 4 ou 5 vis de roue telles que la vis 4 visible sur la figure, traversant un perçage de la roue pour s'ancrer dans un taraudage complémentaire du moyeu, l'axe de la vis 4 étant parallèle à l'axe X de la roue 1 et du moyeu 2. Ce dernier est monté à rotation sur le porte-fusée 3 grâce à un palier à billes 5.

L'ensemble de la figure 1 comprend encore un disque 6 constituant la pièce tournante d'un frein à disque associé à la roue 1 et comportant en outre, classiquement, un étrier fixe (non représenté) portant deux patins 10₁, 10₂ pouvant être sélectivement appliqués sur deux faces en regard du disque pour arrêter la rotation du disque 6 et de la roue 1 dont il est solidaire. Des conduits de ventilation 7 peuvent être prévus dans le disque 6 pour évacuer les calories engendrées par le frottement des patins sur ce disque.

La solidarisation de la roue 1, du moyeu 2 et du disque 6 est assurée par les vis de roue 4 qui traversent des perçages prévus dans le disque 6, pour s'ancrer dans des taraudages formés dans le moyeu 2. La mise en place des vis 4 exige évidemment que le disque 6, comme la roue 1, soit disposé dans une position angulaire prédéterminée par rapport aux taraudages du moyeu 2. Les vis serrent ainsi la partie centrale du disque 6, entre la roue 1 et le moyeu 2. On sait qu'un tel montage, et un serrage adéquat du disque, permettent d'absorber en toute circonstance le couple de freinage appliqué au disque par les patins du frein.

Comme représenté à la figure 2 du dessin annexé, qui représente en vue agrandie le détail A de la figure 1, le disque 6 est percé d'un trou circulaire central 8 qui s'ajuste avec un jeu j sur une portée annulaire 2a du moyeu 2. L'existence de ce jeu facilite le montage et le démontage du disque 6 sur le moyeu 2. Le disque 6 est serré par les vis 4 sur un épaulement transversal 2b du moyeu 2. Il occupe ainsi des positions axiale et angulaire prédéterminées sur le moyeu 2.

Il arrive que la roue 1 doive être démontée du moyeu 2, par exemple pour permettre la réparation ou le remplacement du pneumatique (non représenté) monté classiquement sur la jante de la roue 2. On démonte pour ce faire les vis 4 avant de retirer la roue du moyeu 2. Le disque n'étant plus alors fixé sur le moyeu par le serrage appliqué par la roue pourrait, en l'absence de moyens de maintien adéquats, basculer sur l'axe X et/ou s'écarter de la position angulaire dans laquelle les perçages du disque sont alignés avec les taraudages du moyeu, ce qui compliquerait le remontage ultérieur de la roue. Classiquement ces moyens de maintien sont constitués par des vis telles que la vis à tête conique 9 traversant un trou prévu dans la partie centrale du disque pour s'ancrer dans un taraudage coaxial formé dans le moyeu 2, dans une position prédéterminée par rapport aux axes des autres taraudages réservés aux vis 4.

Ces vis à tête conique assurent ainsi le maintien du disque dans une position angulaire précise et prédéterminée. En combinaison avec les vis 4 elle serrent aussi une face du disque 6 contre l'épaulement annulaire 2b du moyeu 2, ce qui assure le maintien du disque dans une position axiale précise et prédéterminée sur ce moyeu On peut ainsi maintenir le battement axial de la périphérie du disque 6 en-dessous d'un seuil prédéterminé, par exemple en-dessous de 0,03 mm, pour permettre un freinage sans vibrations de la roue. Les vis 9 à tête conique empêchent en outre que, lors d'un démontage de la roue, des particules étrangères ne s'introduisent entre le moyeu et le disque après un basculement de celui-ci.

L'ensemble tournant constitué par la roue 1, le moyeu 2 et le disque 6 doit être évidemment aussi dépourvu de balourd qu'il est possible, un tel balourd éventuel nécessitant un équilibrage de la roue coûteux en main d'oeuvre, notamment.

A cet égard on notera que le montage avec jeu j du disque 6 sur le moyeu 2 rend possible un décentrement du disque par rapport à l'axe X, un tel décentrement ne pouvant être combattu efficacement que par un positionnement précis des vis de roue et des perçages et taraudages de la roue 1, du moyeu 2 et du disque 6 dans lesquels passent ces vis. Un tel positionnement précis exige des tolérances étroites qui grèvent le prix de revient de fabrication de l'ensemble, d'autant que les perçages et taraudages précités, de même que la géométrie des vis à tête conique qui les traversent, peuvent eux aussi être à l'origine de décentrements de la masse tournante.

Un ensemble de ce type est décrit dans le document US-A-5 890 567.

La présente invention a donc pour but de réaliser un ensemble roue/frein de roue du type décrit en préambule de la présente description, conçu de manière à permettre la réalisation d'un tel ensemble à un prix de revient de fabrication abaissé, notamment par la suppression des sources de balourd évoquées ci-dessus.

La présente invention a aussi pour but de réaliser un tel ensemble dans lequel le maintien en position du disque sur le moyeu est parfaitement et simplement assuré en cas de démontage de la roue.

La présente invention a encore pour but de fournir un procédé d'assemblage d'un tel ensemble.

On atteint ce but de l'invention, ainsi que d'autres qui apparaîtront à la lecture de la description qui va suivre, avec un ensemble roue/frein de roue du type décrit en préambule de la présente description, remarquable en ce que les moyens prévus pour maintenir la pièce tournante du frein sur le moyeu, dans des positions axiale et angulaire prédéterminées quand la roue est démontée, sont constitués par un emmanchement à force de la pièce tournante sur le moyeu.

Comme on le verra plus loin, cet emmanchement à force supprime une cause majeure d'introduction de balourd dans le sous-ensemble tournant constitué par la roue, la pièce tournante du frein et le moyeu, tout en assurant simplement le maintien de la pièce tournante en position sur ce moyeu, en cas de démontage de la roue.

Selon une autre caractéristique de la présente invention, l'emmanchement est établi entre un trou circulaire central traversant la pièce tournante et une portée annulaire formée sur le moyeu.

L'invention fournit aussi un procédé d'assemblage d'un tel ensemble, suivant lequel a) on emmanche axialement à force la pièce tournante sur le moyeu, en repérage axial et angulaire par rapport au moyeu et b) on monte et on fixe la roue sur le moyeu à l'aide de vis traversant et serrant la pièce tournante entre la roue et le moyeu.

D'autres caractéristiques et avantages de la présente invention apparaîtront à la lecture de la description qui va suivre et à l'examen du dessin annexé dans lequel :
- les figures 1 et 2 sont des vues en coupe et de détail, respectivement, d'un ensemble roue/frein de roue de la technique antérieure, décrit en préambule de la présente description et,
- les figures 3 et 4 sont des vues analogues à celles des figures 1 et 2 respectivement, représentant un mode de réalisation préféré de l'ensemble roue/frein de roue suivant la présente invention.

On se réfère aux figures 3 et 4 du dessin annexé où des références numériques identiques à des références utilisées sur les figures 1 et 2 repèrent des éléments ou organes identiques ou analogues. C'est ainsi que l'on retrouve dans ce mode de réalisation les éléments ou organes repérés 1 à 8 et 10₁, 10₂ aux figures 1 et 2.

Selon une caractéristique importante de la présente invention, l'ensemble représenté aux figures 3 et 4 comporte des moyens de maintien du disque 6 sur le moyeu 2 en cas de démontage de la roue 1, constitués par un emmanchement à force du trou circulaire central 8 percé dans le disque 6, sur une portée annulaire 2a du moyeu 2.

Cet emmanchement à force exige que le diamètre du trou central 8 du disque 6 soit inférieur à celui de cette portée annulaire, à l'inverse de ce que l'on observe sur l'ensemble des figures 1 et 2 (voir le jeu j, figure 2).

A titre d'exemple illustratif et non limitatif seulement, on contraindra pour ce faire le diamètre de la portée 2a à être compris entre 60,950mm et 61,000mm et celui du trou 8, entre 60,824mm et 60,944mm. Avec de tels diamètres et une longueur d'emmanchement 1 (voir figure 4) avantageusement inférieure à 2mm, on assure une fixation ferme du disque sur le moyeu, autorisant cependant un démanchement du disque à l'aide d'outils courants, comme on le verra plus loin.

Au montage du disque 6 sur le moyeu 2, on applique un effort axial au disque, (de l'ordre de 3000 daN par exemple) à l'aide d'un outil approprié. Bien entendu, préalablement à cette application d'efforts, les perçages du disque 6 sont mis en repérage avec les taraudages du moyeu 2. L'emmanchement à force du disque assure un frettage du moyeu 2, sans rabattement ou fluage des matériaux métalliques constituant le disque 6 et le moyeu 2. Le disque 6 vient alors s'appuyer sur l'épaulement annulaire 2b qui définit précisément la position axiale du disque 6 sur ce moyeu 2.

L'emmanchement obtenu assure en outre un blocage ferme, en repérage, de la position angulaire relative du disque du moyeu. De ce fait il est ensuite aisé de monter la roue 1 sur le disque et le moyeu et de l'y fixer à l'aide des vis de roue 4. Le couple de serrage de ces vis de roue 4 est réglé à une valeur qui établit un serrage du disque 6 entre la roue 1 et le moyeu 2 propre à permettre au disque d'encaisser le couple de freinage maximal qui peut lui être appliqué.

Outre qu'il assure un maintien ferme en place du disque 6 en cas de démontage de la roue 1, l'emmanchement à force de ce disque sur le moyeu 2 suivant la présente invention procure plusieurs avantages.

En premier lieu, il supprime tout risque de balourd introduit par un éventuel décentrement du trou 8 du disque par rapport à la portée 2a du moyeu.

En deuxième lieu, il permet de supprimer les vis 9 qui, dans l'ensemble de la technique antérieure représentée aux figures 1 et 2, maintiennent le disque sur le moyeu quand la roue est démontée. Cette suppression entraîne celle des perçages et taraudages associés à ces vis, dans le disque et le moyeu. Toutes ces suppressions réduisent les coûts d'usinage et de montage de l'ensemble, conformément à l'un des buts poursuivis par la présente invention.

Ces suppressions entraînent aussi, évidemment, celles des balourds qui peuvent naître des tolérances acceptées pour les positions de ces perçages et taraudages, conformément à un autre but de l'invention. Il en résulte un moindre coût des opérations d'équilibrage de l'ensemble tournant constitué par la roue, le disque et le moyeu.

L'emmanchement à force du disque sur le moyeu n'empêche nullement un démontage du disque en cas de besoin, par exemple quand ce disque doit être remplacé du fait d'une usure ou d'une déformation, ou encore d'un endommagement dû à un choc.

Pour ce faire, on peut, après avoir bloqué le moyeu en rotation, introduire deux tiges dans les conduits de ventilation 7 du disque 6, en deux positions diamétralement opposées, puis agir sur ces leviers pour démonter manuellement à force le disque du moyeu.

Comme le disque abîmé doit être rebuté, on peut aussi le déboîter du moyeu avec des coups de masse.

Pour remonter à force un disque neuf à la place de celui que l'on vient d'enlever, on utilise l'effort d'emmanchement qui est développé sur le disque par la roue lorsqu'on remet en place les vis 4 pour fixer de nouveau la roue sur le moyeu, avec pincement du disque entre ceux-ci.

Bien entendu l'invention n'est pas limitée au mode de réalisation décrit et représenté qui n'a été donné qu'à titre d'exemple. C'est ainsi que la présente invention s'applique évidemment aussi à un ensemble comportant un frein à tambour plutôt qu'un frein à disque, les principes de la présente invention étant immédiatement transposables par l'homme de métier à la fixation sur le moyeu de roue du tambour d'un tel frein.

De même l'emmanchement de la pièce tournante, disque ou tambour, sur le moyeu pourrait s'opérer autrement que par forçage d'un trou circulaire central de la pièce tournante sur une portée annulaire du moyeu, par exemple par forçage de goujons solidaires de l'un de ces deux organes, dans des trous prévus dans l'autre.

## Revendications

1. Ensemble roue/frein de roue pour véhicule automobile, ledit frein comportant une pièce tournante (6) montée sur un moyeu (2) de support de ladite roue (1) dans des positions axiale et angulaire prédéterminées, ladite roue (1) étant fixée sur ledit moyeu (2) par des vis (4) serrant en outre ladite pièce tournante (6) entre ladite roue (1) et ledit moyeu (2), des moyens étant prévus pour maintenir ladite pièce tournante (6) sur ledit moyeu (2) dans lesdites positions prédéterminées quand ladite roue (1) est démontée, **caractérisé en ce que** lesdits moyens de maintien sont constitués par un emmanchement à force de ladite pièce tournante (6) sur ledit moyeu (2).

2. Ensemble conforme à la revendication 1, **caractérisé en ce que** ledit emmanchement est établi entre un trou circulaire central (8) traversant ladite pièce tournante (6) et une portée annulaire (2a) formée sur le moyeu (2).

3. Ensemble conforme à l'une quelconque des revendications 1 et 2, **caractérisé en ce que** ladite pièce tournante (6) prend la forme d'un disque.

4. Ensemble conforme à l'une quelconque des revendications 1 et 2, **caractérisé en ce que** ladite pièce tournante prend la forme d'un tambour.

5. Procédé d'assemblage de l'ensemble conforme à l'une quelconque des revendications 1 à 4, **caractérisé en ce que** a) on emmanche axialement à force ladite pièce tournante (6) sur ledit moyeu (2), en repérage axial et angulaire par rapport audit moyeu (2), et b) on monte et on fixe ladite roue (1) sur ledit moyeu (2) à l'aide de vis (4) traversant et serrant ladite pièce tournante (6) entre ladite roue (1) et ledit moyeu (2).

6. Procédé conforme à la revendication 5, **caractérisé en ce que**, à l'étape a), on emmanche ladite pièce tournante (6) sur ledit moyeu (2) en passant à force un trou circulaire central (8) de ladite pièce (6) sur une portée annulaire (2a) dudit moyeu (2), de diamètre légèrement supérieur à celui dudit trou central.

7. Procédé conforme à l'une quelconque des revendications 5 et 6, **caractérisé en ce qu'**on emmanche la pièce tournante (6) sur le moyeu (2) sans fluage de matière.

## Claims

1. Wheel/wheel brake assembly for an automotive vehicle, said brake comprising a revolving part (6) mounted on a support hub (2) of said wheel (1) in predetermined axial and angular positions, said wheel (1) being fixed on said hub (2) by screws (4) additionally clamping said revolving part (6) between said wheel (1) and said hub (2), means being provided for holding said revolving part (6) on said hub (2) in said predetermined positions when said wheel (1) is demounted, **characterized in that** said holding means consist of press-fitting said revolving part (6) on said hub (2).

2. Assembly according to Claim 1, **characterized in that** said fit is established between a central circular hole (8) passing through said revolving part (6) and an annular bearing surface (2a) formed on the hub (2).

3. Assembly according to either one of Claims 1 and 2, **characterized in that** said revolving part (6) takes the form of a disc.

4. Assembly according to either one of Claims 1 and 2, **characterized in that** said revolving part takes the form of a drum.

5. Method of assembling the assembly according to any one of Claims 1 to 4, **characterized in that** a) said revolving part (6) is press-fitted axially onto said hub (2), being located axially and angularly relative to said hub (2), and b) said wheel (1) is mounted and fixed on said hub (2) by means of screws (4) passing through and clamping said revolving part (6) between said wheel (1) and said hub (2).

6. Method according to Claim 5, **characterized in that**, in stage a), said revolving part (6) is fitted onto said hub (2) by forcing a central circular hole (8) of said part (6) over an annular bearing surface (2a) of said hub (2), which has a diameter which is slightly larger than that of said central hole.

7. Method according to either one of Claims 5 and 6, **characterized in that** the revolving part (6) is fitted on the hub (2) without the material undergoing plastic flow.

## Patentansprüche

1. Baugruppe aus Rad/Radbremse für Kraftfahrzeuge, wobei die Bremse ein Drehteil (6) umfasst, das in vorbestimmten Axial- und Winkelpositionen auf eine Nabe (2) zum Tragen des Rads (1) montiert ist, wobei das Rad (1) an dieser Nabe (2) durch Schrauben (4) befestigt ist, die dieses Drehteil (6) außerdem zwischen dem Rad (1) und der Nabe (2) einspannen, wobei Mittel vorgesehen sind, um das Drehteil (6) in den vorbestimmten Positionen auf der Nabe (2) zu halten, wenn das Rad (1) abgenommen ist, **dadurch gekennzeichnet, dass** diese Haltemittel aus einer Presspassung des Drehteils (6) auf der Nabe (2) bestehen.

2. Baugruppe nach Anspruch 1, **dadurch gekennzeichnet, dass** diese Passung zwischen einem zentralen kreisrunden Loch (8), das durch das Drehteil (6) geht, und einem ringförmigen Sitz (2a) hergestellt wird, der auf der Nabe (2) geformt ist.

3. Baugruppe nach einem der Ansprüche 1 und 2, **dadurch gekennzeichnet, dass** das Drehteil (6) die Form einer Scheibe annimmt.

4. Baugruppe nach einem der Ansprüche 1 und 2, **dadurch gekennzeichnet, dass** das Drehteil die Form einer Trommel annimmt.

5. Verfahren zum Zusammenbau der Baugruppe nach einem der Ansprüche 1 bis 4, **dadurch gekennzeichnet, dass** a) das Drehteil (6) axial auf die Nabe (2) aufgepresst wird, in Achs- und Winkelausrichtung in Bezug auf die Nabe (2), und b) das Rad (1) auf die Nabe (2) montiert wird und mithilfe von Schrauben (4) befestigt wird, die durch das Drehteil (6) geführt werden und es zwischen dem Rad (1) und der Nabe (2) einspannen.

6. Verfahren nach Anspruch 5, **dadurch gekennzeichnet, dass** in Schritt a) das Drehteil (6) auf die Nabe (2) aufgepresst wird, indem ein zentrales kreisrundes Loch (8) des Drehteils (6) auf einen ringförmigen Sitz (2a) der Nabe (2) pressgepasst wird, dessen Durchmesser etwas größer ist als der des zentralen Lochs.

7. Verfahren nach einem der Ansprüche 5 und 6, **dadurch gekennzeichnet, dass** das Drehteil (6) ohne Kriechen des Materials auf die Nabe (2) aufgepresst wird.
